# EUROPEAN PATENT APPLICATION

(11) **EP 0 590 977 A1**
(43) Date of publication of application: **06.04.1994**
(21) Application number: 93307760.4
(22) Date of filing: 30.09.1993
(51) Int. Cl.: G03C 1/83

(54) **Silver halide photographic light-sensitive material**

(30) Priority: 30.09.1992 JP 283589/92
(71) Applicant: KONICA CORPORATION, Tokyo 160 (JP)
(72) Inventor: Onishi, Akira, c/o Konica Corporation, Hino-shi, Tokyo (JP); Usagawa, Yasushi, c/o Konica Corporation, Hino-shi, Tokyo (JP); Yamada, Taketoshi, c/o Konica Corporation, Hino-shi, Tokyo (JP); Ogawa, Yoshiko, c/o Konica Corporation, Hino-shi, Tokyo (JP); Hirabayashi, Shigeto, c/o Konica Corporation, Hino-shi, Tokyo (JP)
(74) Representative: Ellis-Jones, Patrick George Armine

(57) **Abstract**

A silver halide photographic light-sensitive material comprising a support having thereon hydrophilic colloidal layers including a silver halide emulsion layer, wherein at least one of the hydrophilic colloidal layers contains a silver salt of a dye represented by the following formula [I] or [II] :

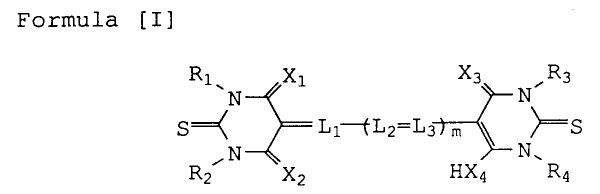

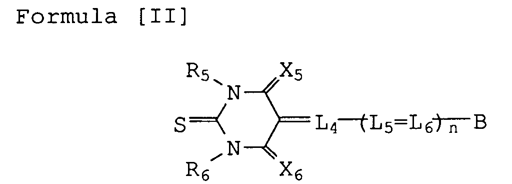

## Description

### FIELD OF THE INVENTION

The present invention relates to a silver halide photographic light-sensitive material containing a novel nondiffusible dye. More specifically, the present invention relates to a silver halide photographic light-sensitive material containing a novel nondiffusible dye improved in capabilities of being removed or decolored in the processing steps.

### BACKGROUND OF THE INVENTION

In the manufacture of silver halide photographic light-sensitive materials (hereinafter referred to as light-sensitive materials), it is well known to add a dye to light-sensitive material's component layers so as to absorb light having specific wavelengths for purposes of filtering the light, preventing halation and irradiation, and adjusting the sensitivity of a light-sensitive emulsion to a desired one. And tinting of a hydrophilic colloidal layer with such a dye is practiced in the industry.

Among the light-sensitive material's component layers, the filter layer is usually located on the upper light-sensitive emulsion layer or between the emulsion layer and another emulsion layer to convert the incident light arriving at the emulsion layer into light having a desirable spectral composition. The antihalation layer is provided between the light-sensitive emulsion layer and the support or on the reverse side of the support, for the purpose of improving the sharpness of images by absorbing harmful light reflected at the interface of emulsion layer and support or at the reverse side of the support.

Further, in order to improve image sharpness by means of preventing irradiation, it is also practiced to absorb reflected and scattered light harmful to silver halides by tinting the light-sensitive emulsion layer with a dye.

Besides absorption spectra appropriate for respective purposes, dyes used for such purposes are required to have capabilities of being completely decolored, or readily dissolved and removed from a light-sensitive material, in the developing process to leave no dye stains; moreover, these must meet requirements of exerting no adverse influences such as fogging and desensitization upon a light-sensitive emulsion, not diffusing from a tinted layer to another layer and further having excellent aging stabilities and causing no discoloration in a light-sensitive material or in an aqueous solution.

A variety of studies have so far been made to develop a dye which satisfies the above requirements. As the result of such studies, there are proposed the use of various compounds, and examples thereof include benzylidene dyes disclosed in U.S. Pat. Nos. 3,540,887, 3,544,325, 3,560,214, Japanese Pat. Exam. Pub. No. 10578/1956, Japanese Pat. O.P.I. Pub. No. 3623/1976, oxonol dyes in British Pat. No. 506,385, Japanese Pat. Exam. Pub. No. 22069/1964, merocyanine dyes in U.S. Pat. No. 2,493,747, and styryl dyes in U.S. Pat. No. 1,845,404.

Some of these dyes have no large effects on emulsion properties and are capable of being bleached, dissolved or decolored in the processing steps; but, these are not adequate in nondiffusible properties. Accordingly, when used in tinting a specific layer selectively among plural emulsion layers to provide it with the function as a filter layer or an antihalation layer, these easily diffuse to neighboring layers and produce undesirable results: not only lowering in light absorbing property of the layer where these are contained but also exerting bad spectral influences on neighboring layers.

In order to tint a specific hydrophilic colloidal layer selectively without causing these troubles, there are proposed the fixation of such dyes with a mordant as well as the use of nondiffusible dyes.

However, using a mordant is liable to cause problems of low coatability, insufficient control over interlayer diffusion of dyes, difficulty in removing or bleaching dyes in the processing steps, necessity of using a processing solution of high pH, and unsuitability for rapid processing.

Various studies have also been made on the use of nondiffusible dyes as seen, for example, in British Pat. No. 1,077,049 and U.S. Pat. No. 3,471,293 which disclose the use of silver salts of an oxonol dye having a thiobarbituric acid nucleus of specific structure.

Silver salts of this dye, though sufficient in nondiffusibility and in control over interlayer-diffusing property, have a disadvantage that these cannot be easily removed or decolored in the developing process.

As described above, the foregoing requirements are not satisfied by the use of conventional dyes and, therefore, it is demanded that a dye which meets the requirements be developed.

### SUMMARY OF THE INVENTION

Accordingly, a first object of the present invention is to provide a silver halide photographic light-sensitive material containing, in its light-sensitive silver halide emulsion layer or nonlight-sensitive colloidal layer, a nondiffusible dye having good absorption-spectral characteristics. A second object of the present invention is to provide a silver halide photographic light-sensitive material containing a dye capable of being readily removed or decolored in photographic processing and suitable for rapid photographic processing. A third object of the present invention is to provide a silver halide photographic light-sensitive material containing a dye having no adverse effects, such as fogging and desensitization, upon photographic properties of a light-sensitive silver halide emulsion.

The above objects of the present invention are attained by the following silver halide photographic light-sensitive material.

The silver halide photographic light-sensitive material containing a silver salt of a compound represented by the following formula [I] or [II]:

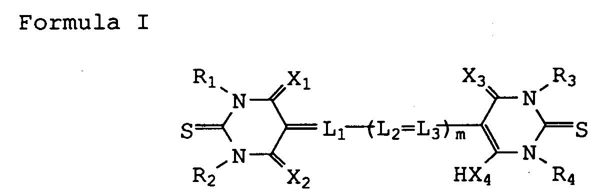

In the formula, R₁ to R₄ each represent a hydrogen atom or an alkyl, alkenyl, aryl or heterocyclic group; X₁ to X₄ each represent an oxygen or sulfur atom; L₁ to L₃ each represent a methine group; and m represents zero or an integer of 1, 2 or 3; provided that at least one acid group is contained in the molecule, that when R₁ to R₄ each represent a carboxy-substituted alkyl group, the number of carbon atoms in said alkyl group is 2 or more, and that R₁ to R₄ are not hydrogen atoms concurrently.

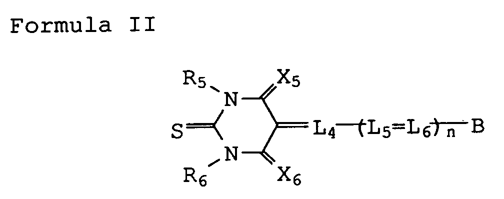

In the formula, R₅ and R₆ each represent a hydrogen atom or an alkyl, alkenyl, aryl or heterocyclic group; X₅ and X₆ each represent an oxygen or sulfur atom; B represents an aryl or heterocyclic group; L₄ to L₆ each represent a methine group; and n represents zero or an integer of 1 or 2; provided that at least one acid group is contained in the molecule, and that when R₅ and R₆ each represent a carboxy-substituted or sulfo-substituted alkyl group, the number of carbon atoms in said alkyl group is 2 or more.

### DETAILED DESCRIPTION OF THE INVENTION

Next, the compound represented by formula [I] or [II] is described.

In formula [I] or [II], the alkyl group represented by R₁ to R₆ includes, for example, a methyl, ethyl, propyl, isopropyl, n-butyl, tert-butyl, cyclopentyl and cyclohexyl group. These alkyl groups may be further substituted with a hydroxyl, cyano, sulfo or carboxyl group, a halogen atom such as a fluorine, chlorine or bromine atom, an alkoxy group such as a methoxy or ethoxy group, an aryloxy group such as a phenoxy, 4-sulfophenoxy or 2,4-disulfophenoxy group, an aryl group such as a phenyl, 4-sulfophenyl or 2,5-disulfophenyl group, an alkoxycarbonyl group such as a methoxycarbonyl or ethoxycarbonyl group, an aryloxycarbonyl group such as a phenoxycarbonyl group or an amino group such as an amino, dimethylamino or anilino group.

The aryl group represented by R₁ to R₆ and B includes, for example, a phenyl, naphthyl and julolydyl group. These groups may be substituted with the alkyl group represented by R₁ to R₆ or with the group defined as the substituent for the alkyl group.

The heterocyclic group represented by R₁ to R₆ includes, for example, a pyridyl, thiazolyl, oxazolyl, imidazolyl, furyl, thienyl, pyrrolyl, pyrazinyl, pyrimidinyl, pyridazinyl, purinyl, selenazolyl, sulfolanyl, piperidinyl, pyrazolyl and tetrazolyl group. These groups may be substituted with the alkyl group represented by R₁ to R₆ or with the group defined as the substituent for the alkyl group.

The alkenyl group represented by R₁ to R₆ includes, for example, a vinyl and allyl group. These groups may be substituted with the alkyl group represented by R₁ to R₆ or with the group defined as the substituent for the alkyl group.

The methine group represented by L₁ to L₆ includes those having a substituent. Examples of such substituents include an alkyl group having 1 to 6 carbon atoms such as a methyl, ethyl, propyl, iso-butyl, carboxymethyl, 3-sulfopropyl, 2-hydroxyethyl and 4-aminobutyl group, an aryl group such as a phenyl, tolyl, p-carboxyphenyl and p-sulfophenyl group, an alkoxy group having 1 to 4 carbon atoms such as a methoxy and ethoxy group, an aryloxy group such as a phenoxy group, an aralkyl group such as a benzyl and phenethyl group, a heterocyclic group such as a thienyl and furyl group, an amino group such as an amino, dimethylamino and anilino group, and an alkylthio group such as a methylthio group.

The compound represented by formula [I] or [II] has at least one acid group in its molecule. Examples of such acid groups include a sulfo, carboxyl and phospho group.

Typical examples of the compound represented by formula [I] or [II] are illustrated below.

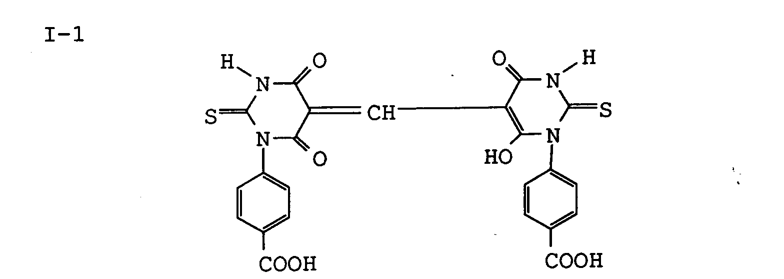

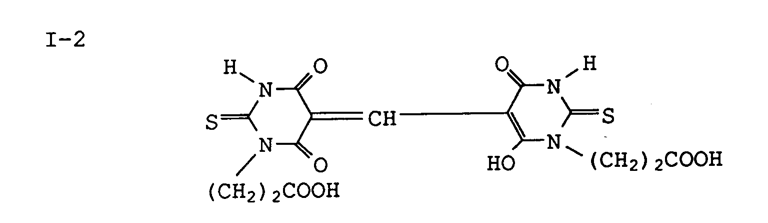

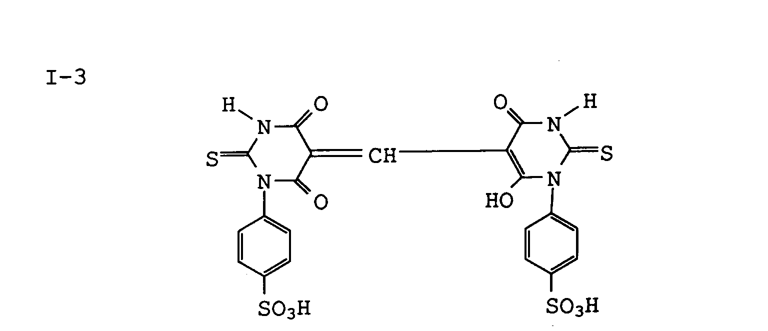

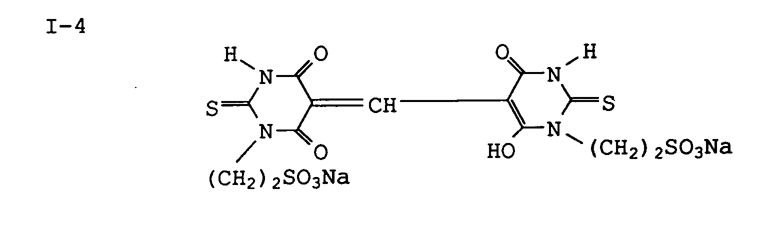

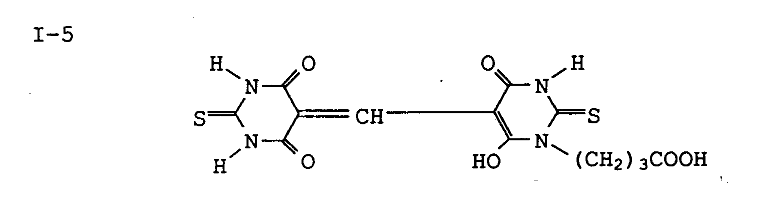

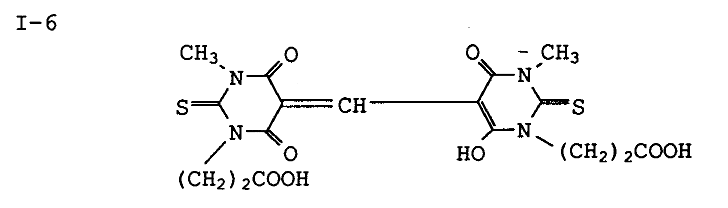

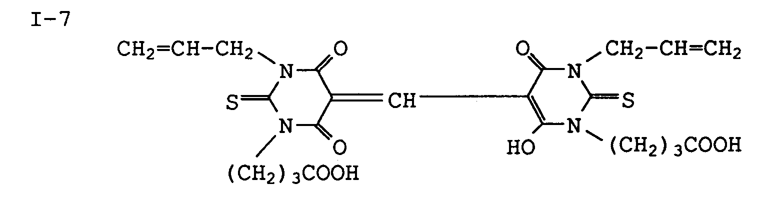

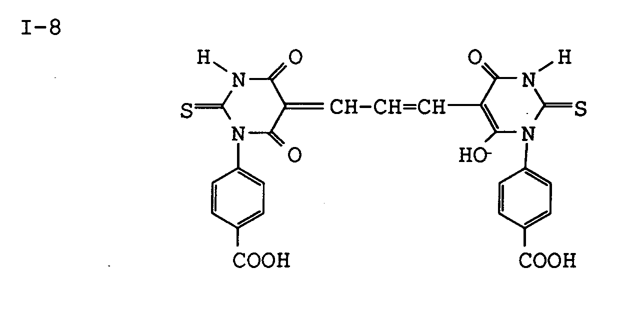

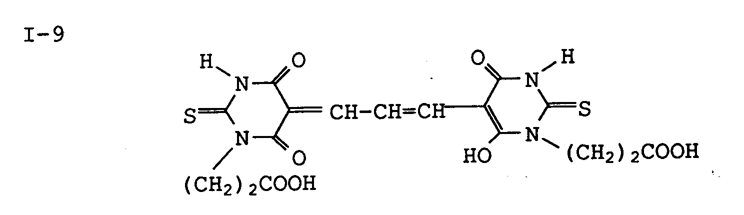

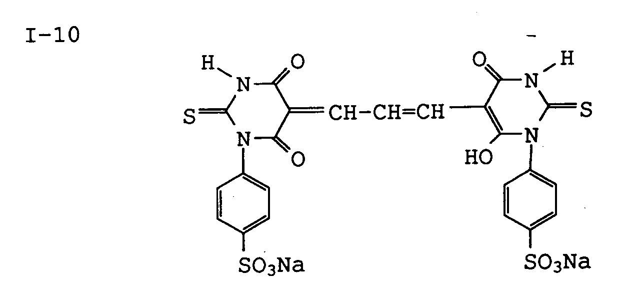

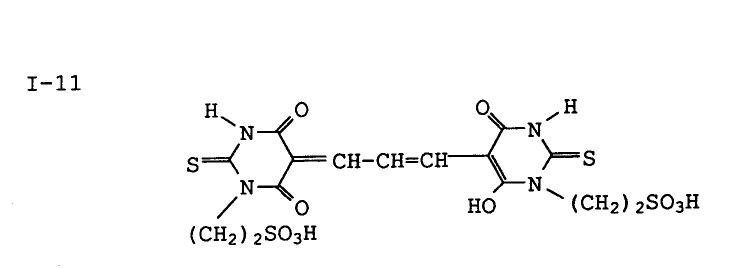

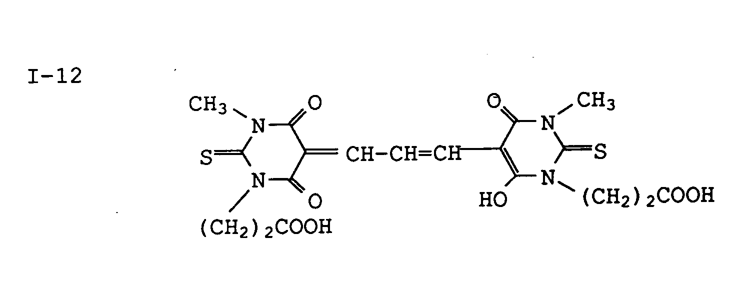

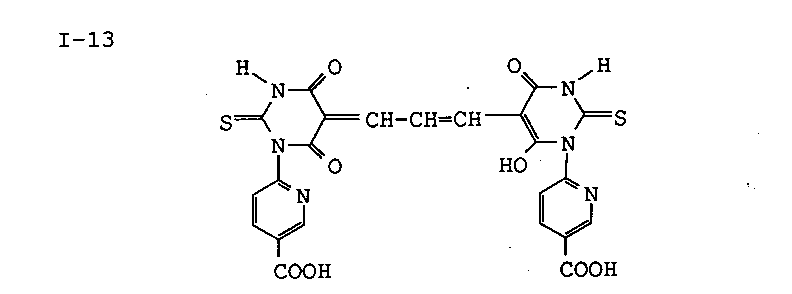

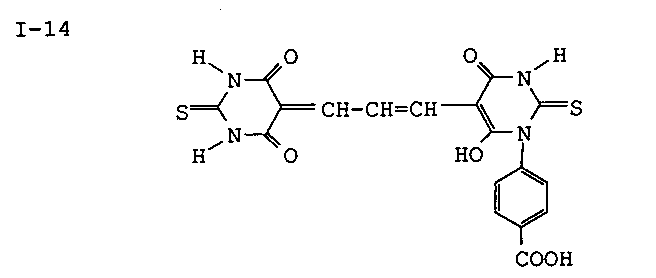

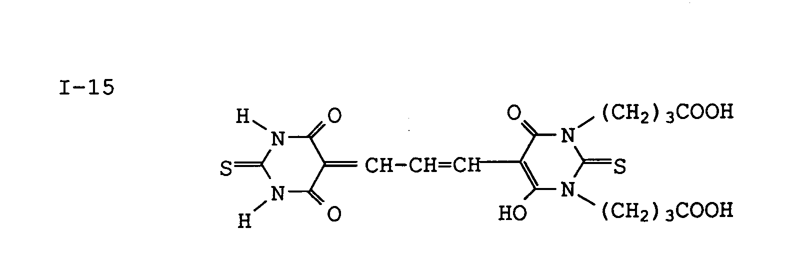

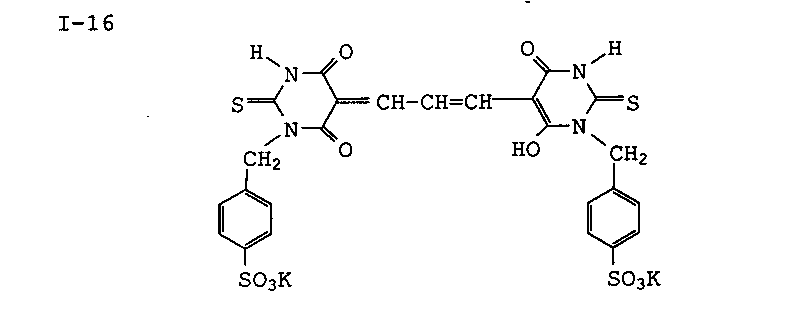

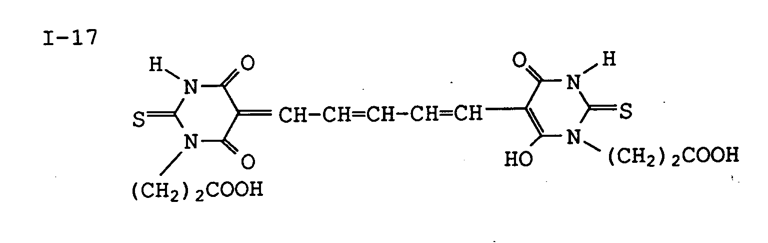

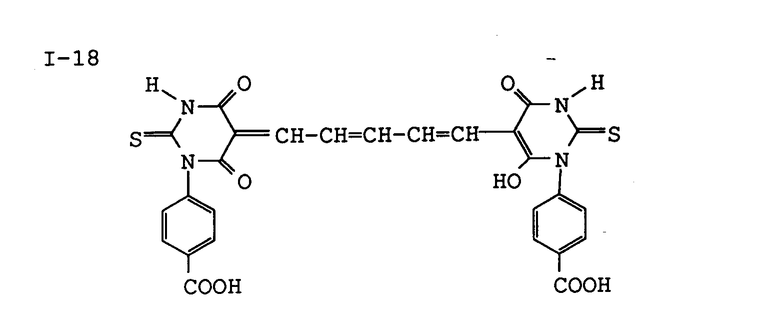

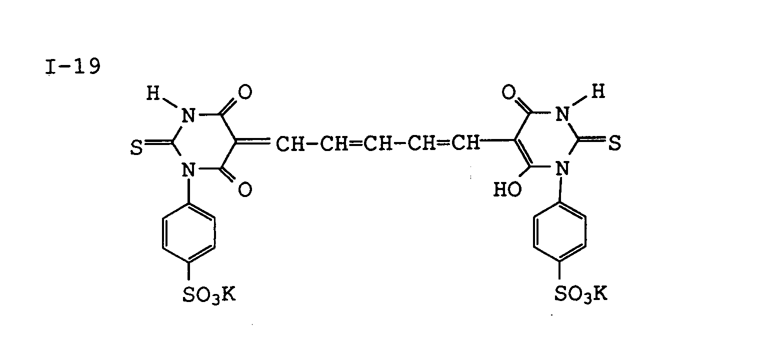

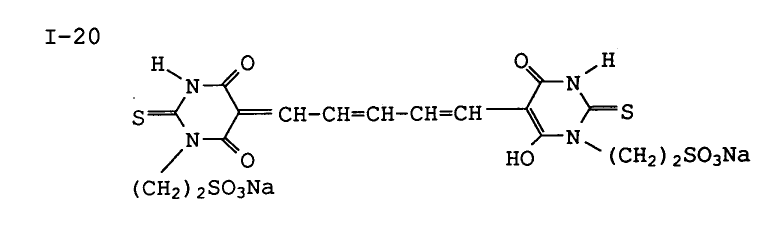

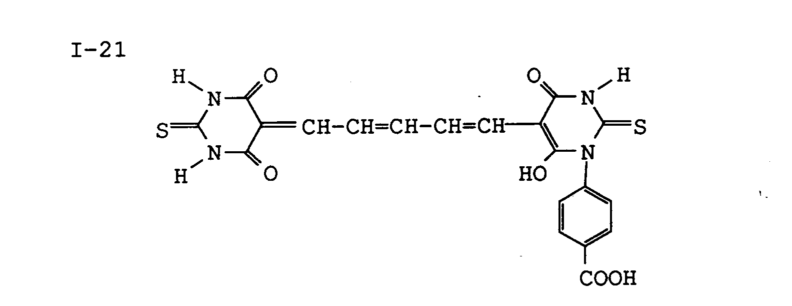

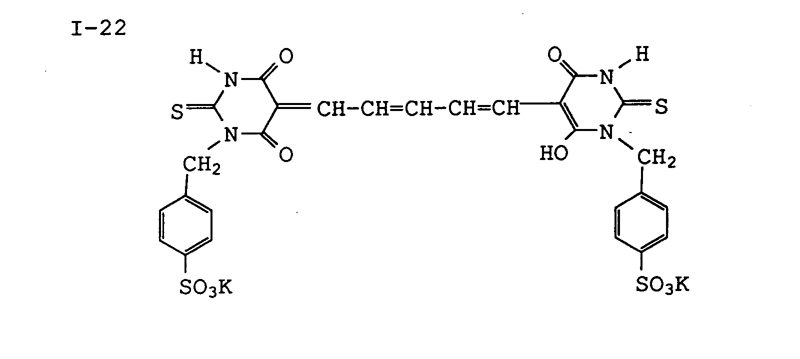

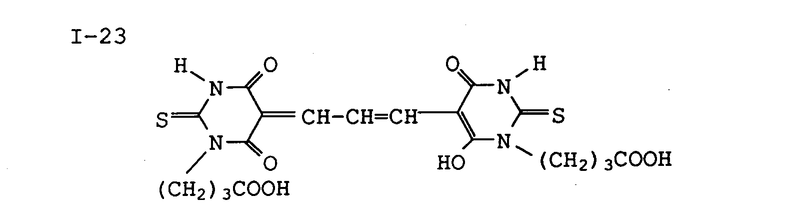

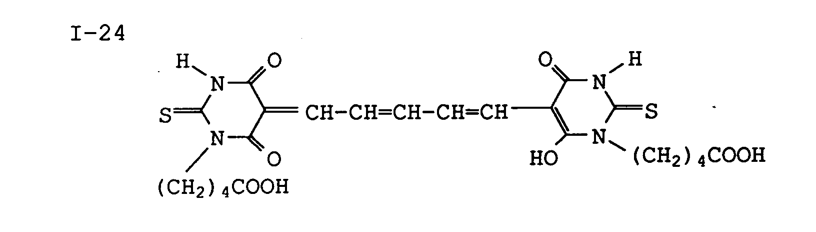

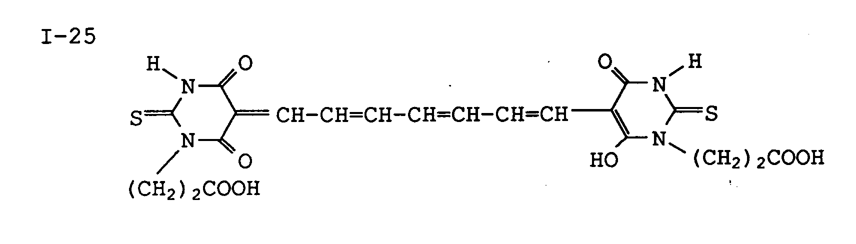

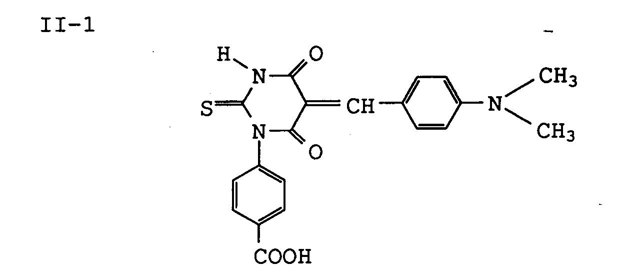

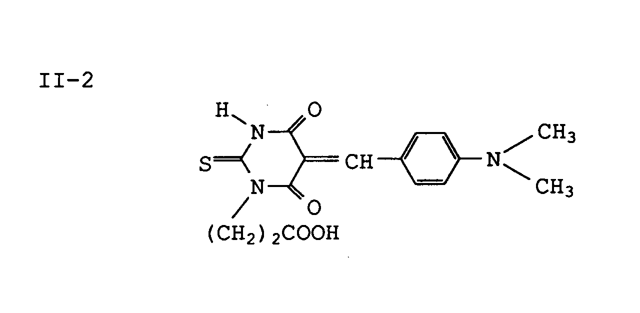

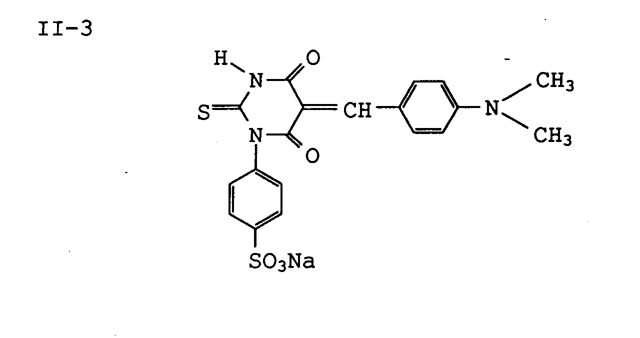

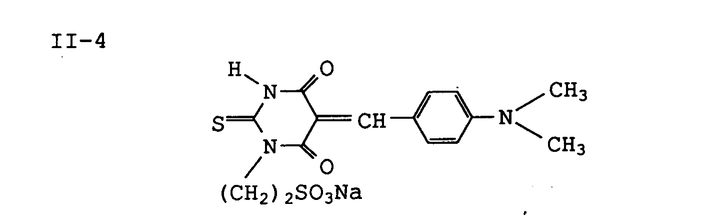

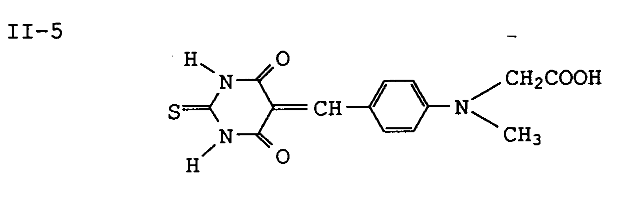

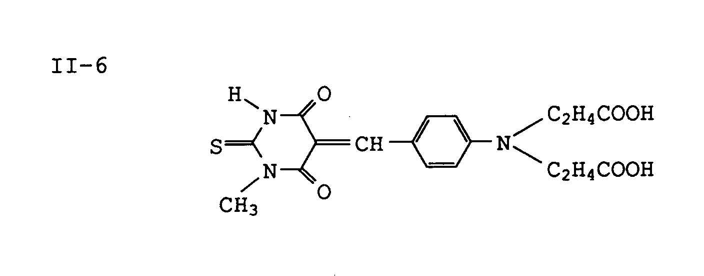

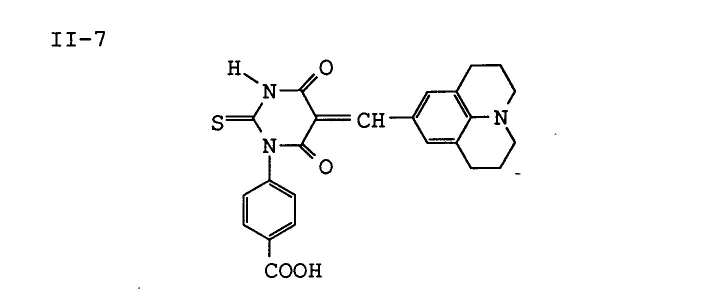

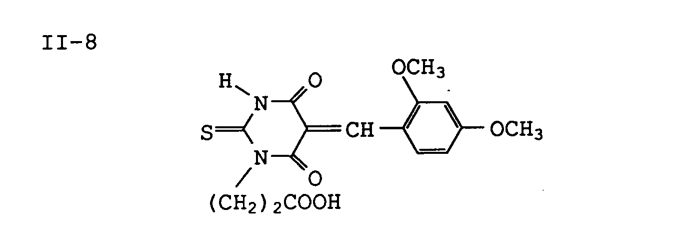

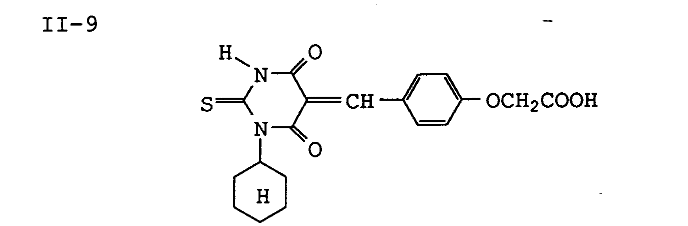

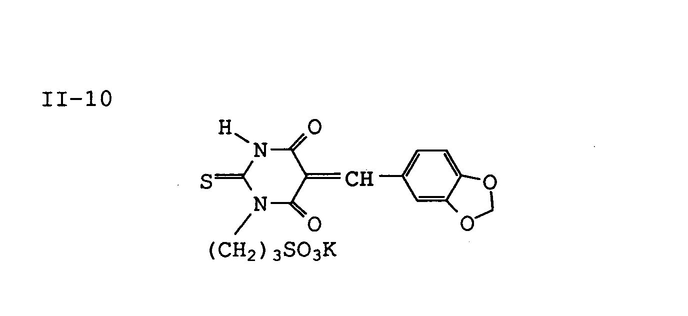

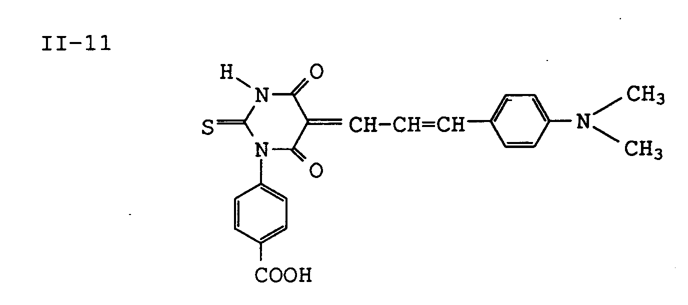

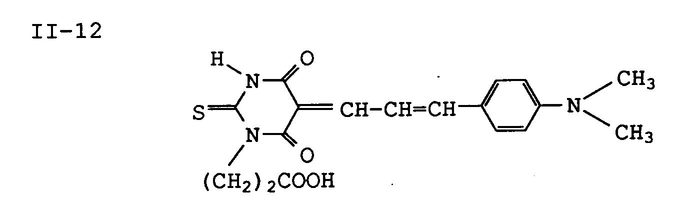

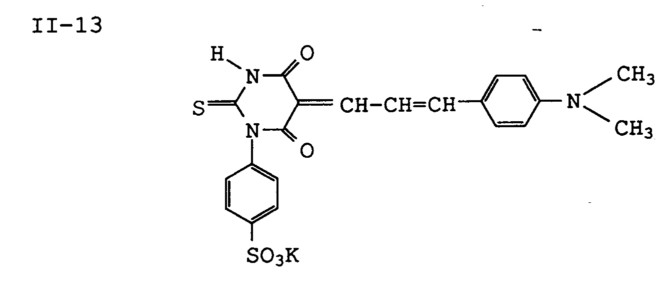

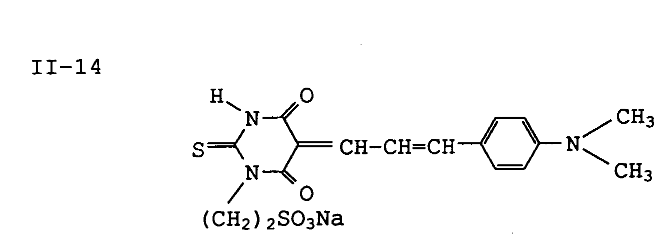

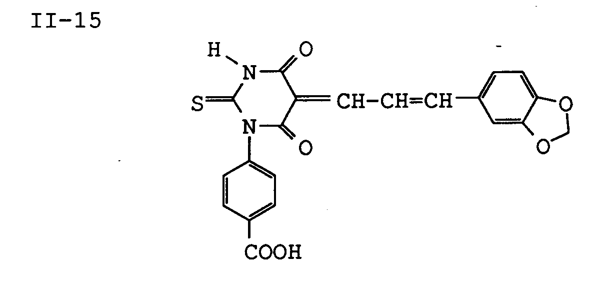

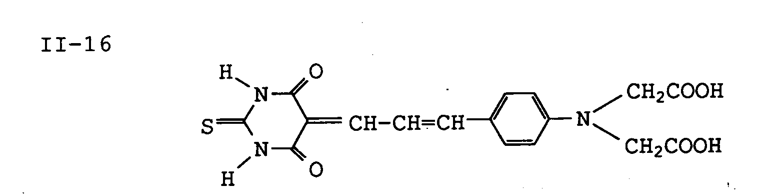

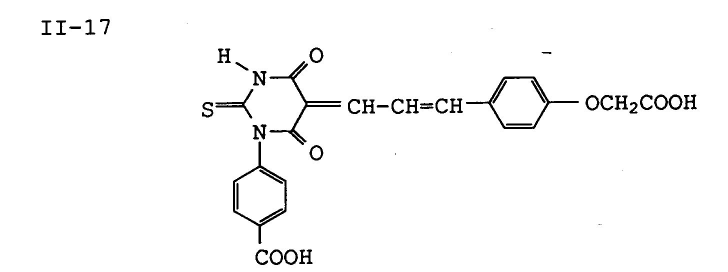

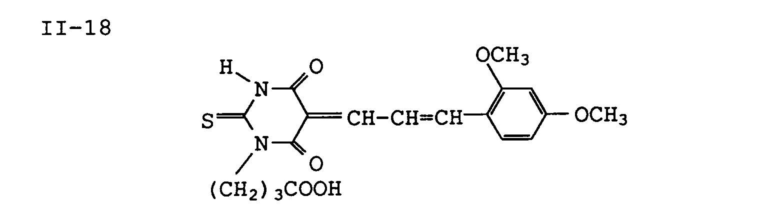

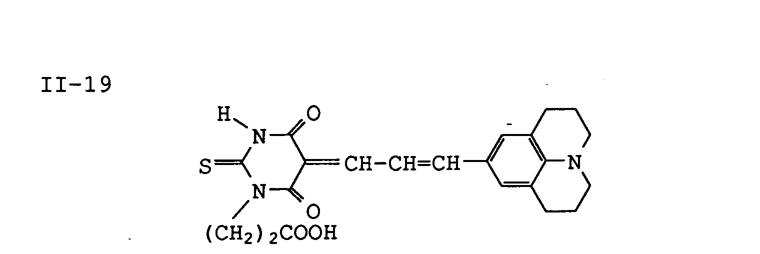

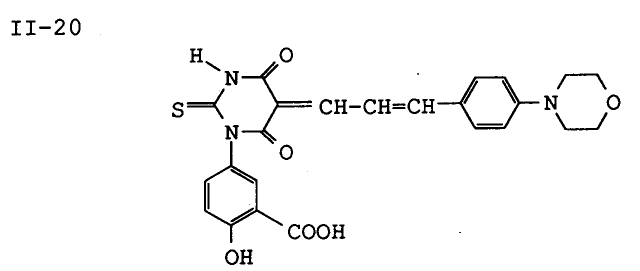

The following are methods for synthesizing a couple of the compounds represented by formula [I] or [II], other illustrated compounds can also be synthesized with ease in similar manners.

### Synthesis Example 1 (Synthesis of Illustrated Compound I-8)

A mixture containing 29.1 g of 1-(4-carboxyphenyl)-2-thiobarbituric acid, 12.9 g of propenedianil hydrochloride, 32 ml of pyridine, 18 ml of triethylamine and 150 ml of dimethylformamide was stirred for 1 hour at 80°C. The reaction mixture was cooled and then poured into 4 l of water, followed by addition of 100 ml of concentrated hydrochloric acid. The resulting precipitates were filtered off, washed thoroughly with water and dried.

The product was purified by being slurried with ethanol under refluxing and then filtered off. After repeating this purification procedure several times, 18.0 g of illustrated compound I-8 was obtained. A methanol solution of this compound showed an absorption peak at 533 nm.

### Synthesis Example 2 (Synthesis of Illustrated Compound II-1)

A mixture of 29.1 g of 1-(4-carboxyphenyl)-2-thiobarbituric acid, 14.9 g of N,-N-dimethylbenzaldehyde and 850 ml of methanol was allowed to react for 2 hours at room temperature. The resultant precipitates were filtered off and washed with methanol.

The product was then purified by being slurried with methanol under refluxing and filtered off. Obtained was 32.0 g of illustrated compound II-1 having an absorption peak at 495 nm as methanol solution.

In converting these dyes into silver salts and in incorporating them into light-sensitive materials, the processes described in British Pat. No. 1,077,049 and U.S. Pat. No. 3,471,293 can be employed.

In the invention, silver salts of the dye is contained in at least one of hydrophilic colloidal layers including a silver halide emulsion layer. Thus, a silver salt of the dye represented by formula [I] or [II] may be contained either in a silver emulsion layer as an anti-irradiation dye or in a nonlight-sensitive hydrophilic colloidal layer as a filtering dye or an antihalation dye. Silver salts of the dye of the invention may be used in combination of two or more types according to a specific requirement; further, these may be used jointly with a dye of another type as long as the effect of the invention is not impaired.

In the embodiment of the invention, the coating weight of silver salt of the dye contained in a filter layer or an antihalation layer is preferably 0.05 to 2.0 g/m², particularly preferably 0.1 to 1.0 g/m². The coating weight of gelatin in these layers is preferably 0.03 to 1.5 g/m², particularly preferably 0.5 to 1.0 g/m².

In the invention, the ratio of-the coating weight of such a silver salt to that of gelatin contained in a filter layer or in an antihalation layer (coating weight of silver salt/coating of gelatin) is usually not less than 0.1, preferably 0.1 to 2.0 and particularly preferably 0.2 to 1.0.

Various types of supports can be used in the light-sensitive material of the invention. In practice, a suitable support is selected, according to the use of the light-sensitive material, from cellulose acetate films, cellulose nitrate films, films of a polyester such as polyethylene terephthalate, films of a polyolefin such as polyethylene, polystyrene films, polyamide films, polycarbonate films, baryta paper, polyolefin-coated paper, polypropylene synthetic paper, glass plates and metal plates.

Suitable hydrophilic colloids for the light-sensitive material of the invention are, for example, gelatin, gelatin derivatives such as phthalated gelatins and benzenesulfonylated gelatins, water soluble natural polymers such as agar, casein and alginic acid, synthetic resins such as polyvinyl alcohol and polyvinyl pyrrolidone, and cellulose derivatives such as carboxymethyl cellulose; these may be used singly or in combination.

As silver halide emulsions suitable for the light-sensitive material of the invention, there can be used any of the silver chloride, silver bromide, silver iodide, silver chlorobromide, silver iodobromide and silver chloroibdobromide which are usually used in silver halide emulsions.

Silver halide emulsions used in the light-sensitive material of the invention can be prepared by any of the usual methods, or by specific methods including the so-called conversion method which is disclosed in Japanese Pat. Exam. Pub. No. 7772/1971 and U.S. Pat. No. 2,592,250 and comprises the steps of forming an emulsion of silver salt grains containing at least one silver salt having a solubility larger than that of silver bromide and then converting these grains partially or entirely into silver bromide grains or silver iodobromide grains. These silver halide emulsions can be chemically sensitized by using, singly or in combination, sensitizers selected, for example, from sulfur sensitizers such as thiosulfates, allylthiocarbamide, thiourea, allylisothiocyanate, cystine; active or inactive selenium sensitizers; and noble metal sensitizers including gold compounds such as potassium chloroaurate, auric trichloride, potassium auric thiocyanate, 2-aurothiabenzothiazole methyl chloride, palladium compounds such as ammonium chloropalladate, sodium chloropalladate, platinum compounds such as potassium chloroplatinate, and ruthenium compounds. Besides the above chemical sensitization, these emulsions can also be subjected to reduction sensitization by use of reducing agents and can be stabilized with triazoles, imidazoles azaindenes, benzothiazolium compounds, zinc compounds, cadmium compounds, mercaptanes or mixtures thereof. Further, these can contain sensitizing compounds of thioether type, quaternary ammonium salt type and polyalkylene oxide type.

If a specific requirement arises, silver halide emulsions used in the light-sensitive material of the invention may be spectrally sensitized with sensitizing dyes. Suitable sensitizing dyes are, for example, cyanine dyes, merocyanine dyes, complex cyanine dyes, oxonol dyes, hemioxonol dyes, styryl dyes, merostyryl dyes and streptocyanine dyes. These sensitizing dyes can be used singly or in combination.

The light-sensitive material of the invention may contain, in its emulsion layers or in other hydrophilic colloidal layers, wetting agents, plasticizers and film property improvers such as glycerin, dihydroxyalkanes including 1,5-pentanediol, esters of ethylene-bis-glycolic acid, bis-ethoxy diethylene glycol succinate and aqueous dispersions of synthetic polymer fine particles prepared by emulsion polymerization. Further, there may also be contained hardeners such as aldehydes, N-methylol compounds including dimethylolurea, muco-halogenoacids, divinyl sulfonic acid, active halogen compounds including 2,4-dichloro-6-hydroxy-s-triazine, dioxane derivatives, divinyl ketones, isocyanates, carbodiimides, and surfactants such as saponins, polyalkylene glycols, polyalkylene glycol ethers, alkylsulfonates, alkylbenzene sulfonates, alkylnaphthalene sulfonates, and further other photographic additives such as optical whitening agents, antistatic agents, antistain agents, ultraviolet absorbents, stabilizers.

The light-sensitive material of the invention may contain color couplers in its silver halide emulsion layers. Such couplers may be either four-equivalent ones or two-equivalent ones, or may be colored couplers for masking or couplers which release a developing inhibitor. Suitable yellow dye forming couplers are open-chain ketomethylene compounds such as acyl acetamide type couplers. Suitable magenta dye forming couplers include pyrazolone type compounds, pyrazolotriazole type compounds and pyrazolotetrazole type compounds. And as cyan dye forming couplers, phenol type compounds and naphthol type compounds are favorably used.

Further, the light-sensitive material of the invention may take any layer configuration conventional light-sensitive materials can have.

### EXAMPLES

Next, the invention is described in detail with examples, but the scope of the invention is not limited to these examples.

### Example 1

In 1,000 ml of water were dissolved 0.1 mol of one of the dyes shown in Tables 1 and 2 and 10.1 g (0.1 mol) of triethylamine. While stirring the solution, 200 ml of 1 mol/l aqueous solution of silver nitrate was added thereto dropwise, and the resulting precipitates were filtered off, washed and dried. The above procedure was repeated for each dye in the tables to prepare silver salts of the dyes.

To 700 ml of 3% aqueous solution of gelatin were added 0.05 mol of the above silver salt and 30 ml of 6.7% solution of surfactant Triton X-200 (made by Rohm & Haas Co.). After adding 2 kg of 1-mm diameter glass beads thereto, the mixture was milled and dispersed for 8 hours with a medium stirring mill (Aquamiser QA-5 made by Hosokawa Micron Co.) to obtain a dispersion of silver salt of each dye.

After adding 0.1 g of bis-vinylsulfonylmethyl ether (gelatin hardener H-1) and a proper amount of coating aid Su-1 to 100 ml of each dispersion, each dispersion was coated on a gelatin-subbed cellulose triacetate film support so as to give a coating weight of dye's silver salt of 0.001 mol/m², followed by drying. Sample Nos. 1-1 to 1-24 were so obtained.

A dispersion comprising fine particles of dye D-5 was prepared in accordance with the method described in Example 1 of Japanese Pat. O.P.I. Pub. No. 23441/1991.
After adding hardener H-1 and coating aid Su-1 thereto as with sample Nos. 1-1 to 1-24, the dispersion was coated on a gelatin-subbed cellulose triacetate film support so as to give a dye coating weight of 0.001 mol/m² and dried to obtain sample No. 1-25.

Further, in accordance with the methods described in Examples 1 to 9 of Japanese Pat. O.P.I. Pub. No. 291051/1988, sample No. 1-26 was prepared by coating, on a gelatin-subbed cellulose triacetate film support, an aqueous solution of gelatin containing dye D-6 and a polymer dispersion mordant in an amount of about 40 times the amount of the dye so as to give a dye coating weight of 0.001 mol/m².

Sample Nos. 1-1 to 1-26 were treated at 20°C for 15 seconds with each of the following fixing solution A, alkali solution B, and water. After being washed and dried, each sample was subjected to spectrophotometry to determine, in contrast to the untreated sample, the degree of decoloration at a maximum absorption wavelength according to the following equation. The results are shown in Tables 1 and 2.
Degree of decoloration (%) = [1 - (density of treated sample/density of untreated sample)] x 100

### Fixing Solution A

- Sodium thiosulfate: 240 g
- Anhydrous sodium sulfite: 15 g
- Glacial acetic acid: 15 g
- Aluminium sulfate: 15 g

Water was added to make up to 1,000 ml.

### Alkali Solution B

- Potassium carbonate: 37.5 g

Water was added to make up to 1,000 ml, and then the pH was adjusted to 10.2 with 1N H₂SO₄.

**Table 1**

| Sample No. | Dye No. | Degree of Decoloration after Washing | Degree of Decoloration after Treatment with Alkali Solution B | Degree of Decoloration after Treatment with Fixing Solution A | Remarks |
|---|---|---|---|---|---|
| 1-1 | I-1 | 0 | 0.7 | 98.2 | Invention |
| 1-2 | I-2 | 0 | 0.6 | 98.0 | Invention |
| 1-3 | I-3 | 0 | 0.9 | 98.3 | Invention |
| 1-4 | I-4 | 0 | 0.9 | 98.2 | Invention |
| 1-5 | I-8 | 0 | 0.5 | 97.8 | Invention |
| 1-6 | I-9 | 0 | 0.6 | 97.7 | Invention |
| 1-7 | I-11 | 0 | 0.7 | 98.0 | Invention |
| 1-8 | I-16 | 0 | 0.7 | 97.7 | Invention |
| 1-9 | I-17 | 0 | 0.4 | 97.5 | Invention |
| 1-10 | I-18 | 0 | 0.4 | 97.6 | Invention |
| 1-11 | I-20 | 0 | 0.5 | 97.4 | Invention |
| 1-12 | I-23 | 0 | 0.6 | 98.0 | Invention |
| 1-13 | II-1 | 0 | 0.7 | 98.2 | Invention |
| 1-14 | II-2 | 0 | 0.8 | 98.1 | Invention |
| 1-15 | II-7 | 0 | 0.8 | 98.0 | Invention |
| 1-16 | II-10 | 0 | 0.8 | 98.2 | Invention |
| 1-17 | II-11 | 0 | 0.5 | 97.4 | Invention |
| 1-18 | II-12 | 0 | 0.5 | 97.3 | Invention |
| 1-19 | II-14 | 0 | 0.7 | 97.5 | Invention |
| 1-20 | II-16 | 0 | 0.4 | 97.3 | Invention |

**Table 2**

| Sample No. | Dye No. | Degree of Decoloration after Washing | Degree of Decoloration after Treatment with Alkali Solution B | Degree of Decoloration after Treatment with Fixing Solution A | Remarks |
|---|---|---|---|---|---|
| 1-21 | D-1 | 0 | 0.1 | 89.7 | Comparison |
| 1-22 | D-2 | 0 | 1.3 | 88.7 | Comparison |
| 1-23 | D-3 | 0 | 1.0 | 89.6 | Comparison |
| 1-24 | D-4 | 0 | 1.8 | 88.3 | Comparison |
| 1-25 | D-5 | 0 | 77.5 | 1.0 | Comparison |
| 1-26 | D-6 | 0.8 | 51.3 | 1.6 | Comparison |

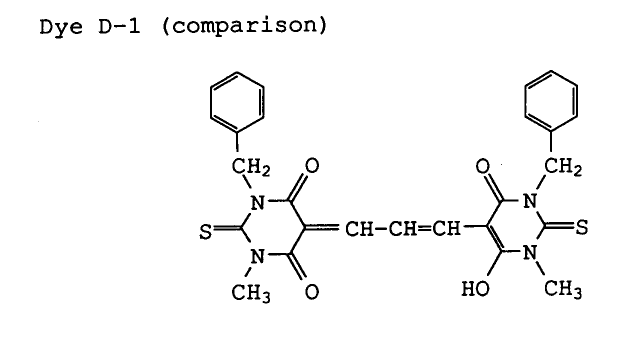

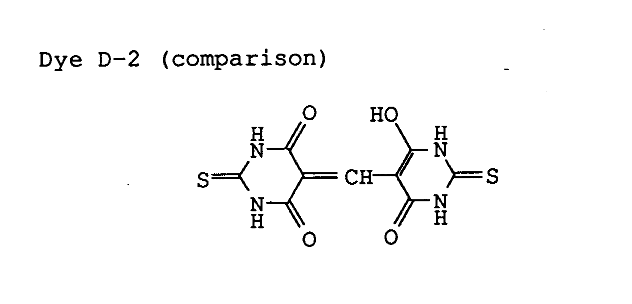

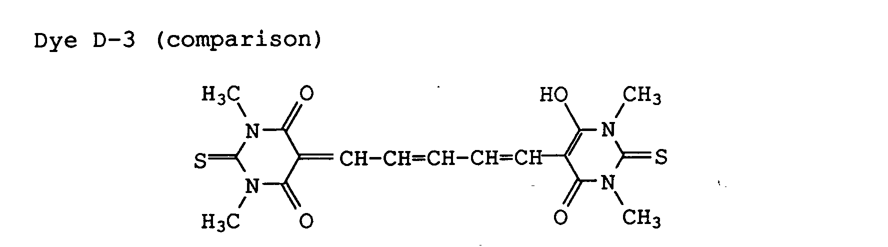

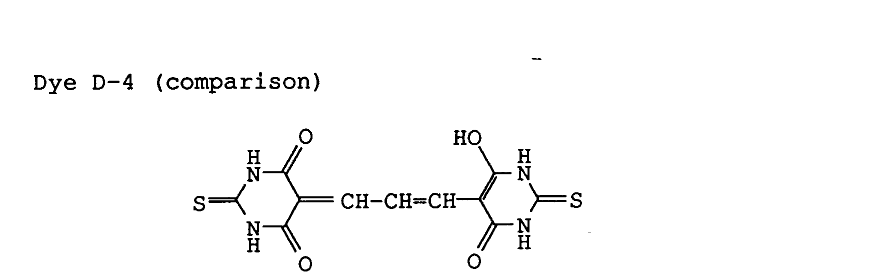

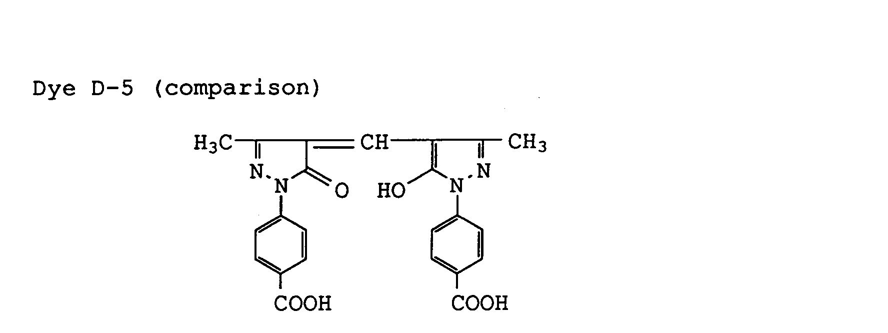

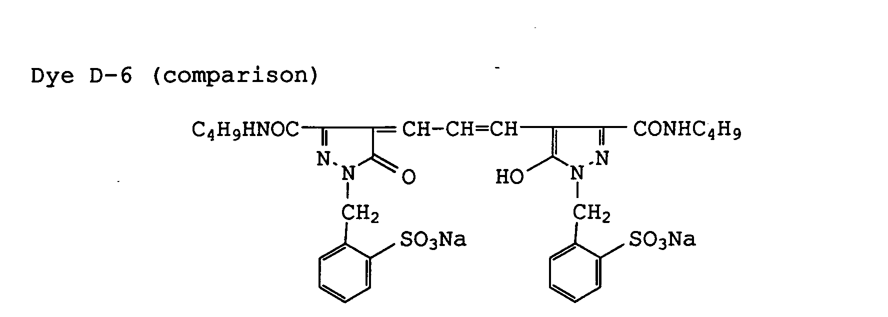

Disclosed in Japanese Pat. O.P.I. Pub. No.63-139949

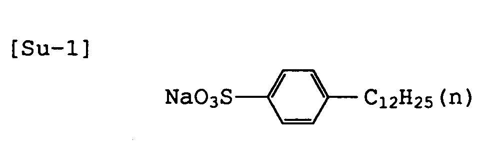

### Polymer dispersion mordant

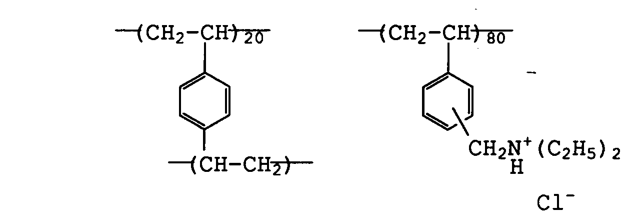

It will be seen in the tables that the silver salts of the dyes according to the invention are higher in degree of decoloration and less in residual dye than the silver salts of the comparative dyes (dyes D-1 to D-4), that these are excellent over the comparative conventional dyes (dyes D-5 and D-6) in capability of being decolored when treated with a fixing solution, and that these are as good as the silver salts of the comparative dyes and the comparative nondiffusible dyes in nondiffusible properties.

### Example 2

### Preparation of Sample No. 2-1

Sample No. 2-1 was prepared by the steps of coating a 10% aqueous solution of gelatin on a gelatin-subbed cellulose triacetate film support and then simultaneously coating thereon a light-sensitive silver halide emulsion layer and a surface protective layer respectively having the following compositions.

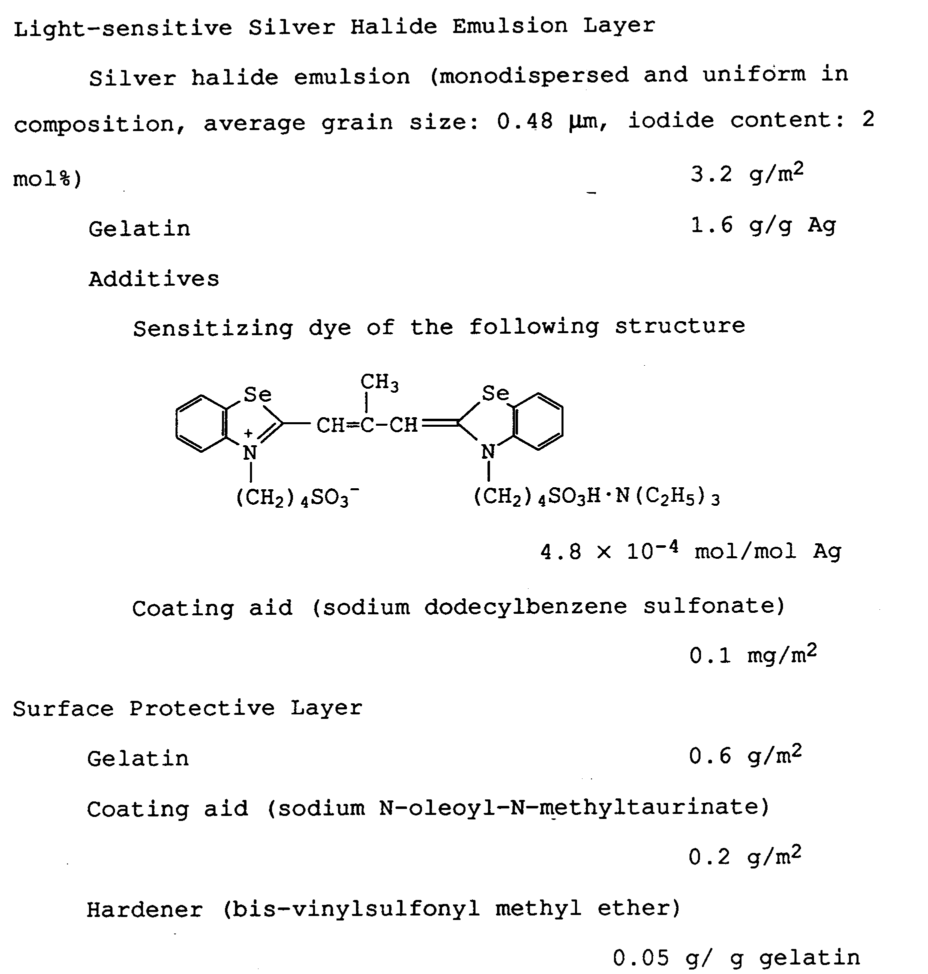

### Preparation of Sample Nos. 2-2 to 2-23

Multilayer photographic elements (sample Nos.2-2 to 2-23) were prepared in the same manner as sample No. 2-1, except that the 10% aqueous solution of gelatin was replaced with a dispersion prepared by the procedure in Example 1 using the dye shown in Table 3.

Sample Nos. 2-1 to 2-23 were exposed to white light though an optical wedge and processed under the following conditions to compare the influence upon photographic properties.

### Processing (at 20°C)

- Developing: 2 min
- Fixing: 3 min
- Washing: 3 min

Drying

Compositions of the processing solutions used in the respective processes were as follows:

### Developer

- Water: 500 ml
- Hydroquinone: 8 g
- Metol: 2 g
- Anhydrous sodium sulfite: 90 g
- Sodium carbonate monohydrate: 52.5 g
- Potassium bromide: 5 g

Water was added to made up to 1 liter.

### Fixer

- Water: 600 ml
- Ammonium thiosulfate: 80 g
- Anhydrous sodium sulfite: 5 g
- Sodium bisulfite: 5 g

Water was added to make up to 1 liter, and then the pH was adjusted to 6.0 with acetic acid. The evaluation results are shown in Table 3.

**Table 3**

| Sample No. | 1st Layer (coating weight mol/m2) | Influence upon Fogging | Remarks | |
|---|---|---|---|---|
| 2-1 | Gelatin layer | 0.06 | - | Control |
| 2-2 | D-1 (0.001) | 0.13 | - | Comparison |
| 2-3 | D-2 (0.001) | 0.14 | - | Comparison |
| 2-4 | D-3 (0.001) | 0.14 | - | Comparison |
| 2-5 | D-4 (0.001) | 0.07 | Yellow stains are slightly found | Comparison |
| 2-6 | D-5 (0.001) | 0.08 | Subtle aggregates are found in coating layer | Comparison |
| 2-7 | I-1 (0.001) | 0.04 | - | Invention |
| 2-8 | I-2 (0.001) | 0.04 | - | Invention |
| 2-9 | I-4 (0.001) | 0.04 | - | Invention |
| 2-10 | I-8 (0.001) | 0.05 | - | Invention |
| 2-11 | I-9 (0.001) | 0.05 | - | Invention |
| 2-12 | I-10 (0.001) | 0.04 | - | Invention |
| 2-13 | I-16 (0.001) | 0.04 | - | Invention |
| 2-14 | I-17 (0.001) | 0.05 | - | Invention |
| 2-15 | I-18 (0.001) | 0.05 | - | Invention |
| 2-16 | I-20 (0.001) | 0.04 | - | Invention |
| 2-17 | II-1 (0.001) | 0.04 | - | Invention |
| 2-18 | II-2 (0.001) | 0.04 | - | Invention |
| 2-19 | II-3 (0.001) | 0.04 | - | Invention |
| 2-20 | II-4 (0.001) | 0.04 | - | Invention |
| 2-21 | II-12 (0.001) | 0.04 | - | Invention |
| 2-22 | II-13 (0.001) | 0.05 | - | Invention |
| 2-23 | II-14 (0.001) | 0.05 | - | Invention |

As is shown in Table 3, a part of the comparative dye group (dyes D-1 to D-3) brought about a little increase in fog densities, showing adverse influences upon fogging. In the samples containing other comparative dyes (dye D-4 and D-5), influences upon fogging were not observed, but yellow stains were found in the sample containing dye D-4 and coatability was impaired in the sample containing dye D-5. On the contrary, the silver salts of the dyes according to the invention did not impair coatability and had little effect on the silver halide contained in the adjacent layer. In addition, the samples containing them were much improved in image sharpness when compared with sample 2-1, demonstrating favorable characteristics of these dyes.

## Claims

1. A silver halide photographic light-sensitive material comprising a support having thereon a hydrophilic colloidal layer, wherein said hydrophilic colloidal layer contains a silver salt of a compound represented by the following formula [I] or [II]: 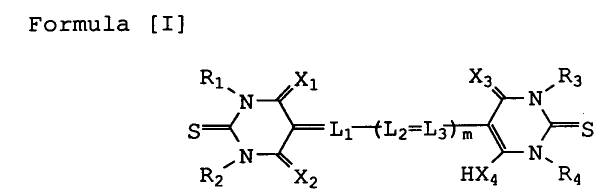 wherein R₁ to R₄ each represent a hydrogen atom or an alkyl, alkenyl, aryl or heterocyclic group; X₁ to X₄ each represent an oxygen or sulfur atom; L₁ to L₃ each represent a methine group; and m represents zero or an integer of 1, 2 or 3; provided that at least one acid group is contained in the molecule, that when R₁ to R₄ each represent carboxy-substituted alkyl group, the number of carbon atoms in said alkyl group is 2 or more, and that R₁ to R₄ are not hydrogen atoms concurrently, 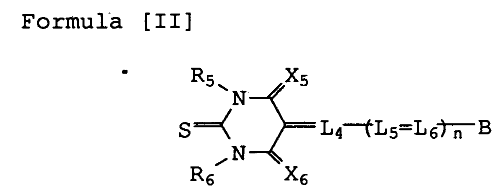 wherein R₅ and R₆ each represent a hydrogen atom or an alkyl, alkenyl, aryl or heterocyclic group; X₅ and X₆ each represent an oxygen or sulfur atom, B represents an aryl or heterocyclic group; L₄ and L₅ each represent a methine group; and n represents zero or an integer of 1 or 2; provided that at least one acid group is contained in the molecule, and that when R₅ and R₆ each represent a carboxy-substituted or sulfo-substituted alkyl group, the number of carbon atoms in said alkyl group is 2 or more.

2. The silver halide photographic material of claim 1, wherein said acid group contained in the molecule is a sulfo, carboxyl or phospho group.

3. The silver halide photographic material of claim 1, wherein said silver salt of said compound represented by formular [I] or [II] is contained in an amount of 0.05 to 2.0 g per m² of the photographic material.
